# EUROPÄISCHE PATENTSCHRIFT

(11) **EP 3 196 841 B1**
(45) Veröffentlichungstag und Bekanntmachung des Hinweises auf die Patenterteilung: **06.09.2023**
(21) Anmeldenummer: 17152725.2
(22) Anmeldetag: 23.01.2017
(51) Int. Cl.: G07B 15/02, G06Q 20/32

(54) **BACK-END SERVER-EINRICHTUNG UND SYSTEM ZUR AUTOMATISCHEN ERMITTLUNG DER NUTZUNG EINES VERKEHRSNETZES**
BACK-END SERVER AND SYSTEM FOR AUTOMATICALLY DETERMINING USE OF A TRANSPORT NETWORK
SERVEUR BACK-END ET SYSTÈME POUR DÉTERMINER AUTOMATIQUEMENT L'UTILISATION D'UN RÉSEAU DE TRANSPORT

(30) Priorität: 22.01.2016 CH 932016
(43) Veröffentlichungstag der Anmeldung: 26.07.2017
(73) Patentinhaber: BLS AG, 3001 Bern (CH)
(72) Erfinder: Smith, Anthony, CH-3095 Spiegel bei Bern (CH); Kronawitter, Andreas, CH-3097 Liebefeld (CH); Leuenberger, Daniel, CH-4588 Oberramsern (CH)
(74) Vertreter: Veni Swiss & European Patent Attorneys

(56) Entgegenhaltungen:
- EP-A1- 2 747 035
- EP-A1- 3 109 818
- US-A1- 2010 197 325
- US-A1- 2011 060 600
- US-A1- 2011 095 876
- US-A1- 2013 185 123
- US-A1- 2015 235 477
- US-A1- 2015 296 334

## Beschreibung

### Technisches Gebiet der Erfindung

Die Erfindung bezieht sich auf die automatische Berechnung der Nutzung eines Verkehrsnetzes, und insbesondere auf die automatische Erkennung der Bewegungen eines Verkehrsteilnehmers durch das Verkehrsnetz anhand eines Mobilgeräts des Verkehrsteilnehmers.

### Hintergrund der Erfindung

Täglich werden Millionen von Personen durch Verkehrsnetze befördert. Ein Verkehrsnetz kann viele einzelne Verkehrsverbindungen (z.B. Bahnstrecken) und -knoten (z.B. Haltestellen) aufweisen. Ein ÖV-Netz kann Verkehrsverbindungen und -knoten verschiedener Verkehrsmittel umfassen, wie z.B. Bahn, Bus, Tram oder Fähre. Der potenzielle Reisende steht manchmal vor einer verwirrenden Auswahl von möglichen Verbindungen in verschiedenen Konstellationen. Zudem muss er sich vor Reisebeginn mit einem gültigen Reisebillett ausrüsten. Die Auswahl und Besorgung eines passenden Billetts kann aufwändig sein, und zwar sowohl für den Reisenden als auch für den Verkehrsbetrieb. Zum Beispiel müssen Billettautomaten entweder an Haltestellen oder in Fahrzeugen zur Verfügung gestellt werden.

### Stand der Technik

Um dem Reisenden die Auswahl einer Beförderungslösung zu erleichtern wurden Systeme vorgeschlagen, die eine optimierte Routenplanung bieten. Es ist zum Beispiel bekannt, Fahrplaninformationen durch statistische und historische Daten eines Verkehrsnetzes zu ergänzen, um dabei einen optimierten Routenvorschlag auszustellen. Solche Systeme können dem Reisenden bei der Planung seiner Reise helfen. Bei der Auswahl des Billetts, hingegen, bieten solche Systeme nur geringe Unterstützung, und zwar insbesondere dann, wenn verschiedene Arten von Billetten (z.B. eine nationale Tageskarte, ein Bahnticket mit Stadtnetzanschlussbillett, ein einfaches Billett) für die Reise in Frage kommen, oder wo verschiedene Reisemodalitäten angeboten werden.

Somit befassen sich solche herkömmlichen Systeme und Verfahren mit der Problematik, eine Optimierung der beabsichtigten Reise zu ermöglichen. Wer genau im Voraus weiss, wo und wie er während eines bestimmten Tages unterwegs sein will, und die ganzen Verbindungskonstellationen auswendig kennt, ist wahrscheinlich durch solche herkömmliche Systeme gut bedient. Wer sich etwas Flexibilität wünscht, hingegen (z.B. um seine Reise unterbrechen oder ganz ändern zu können), muss beim Reisebeginn beachten, dass die ausgewählte Verbindung und der ausgewählte Tarif ihm die gewünschte Flexibilität gewährleisten. Wählt er eine Konstellation mit zu eng oder zu breit definierten Reisemöglichkeiten, kostet ihn sein Fehlkauf mehr als nötig. Zudem verschwendet der Reisender viel Zeit vor dem Billettautomat oder auf den Webseiten verschiedener Verkehrsunternehmen, auf denen er nach der günstigsten Verbindung und/oder dem günstigsten Tarif suchen muss. Für viele Verkehrsteilnehmer ist es bequemer, sich ein teures Jahres- bzw. Monatsabonnement zu kaufen, als vor jeder Fahrt eine günstige Verbindung und das passende Billett auszusuchen bzw. aufzuladen, und zwar auch dann, wenn das Abonnement schliesslich teurer ist als eine individuell optimierte Konstellation von Einzelbilletten, Tageskarten, Abonnementen, Sonderangeboten usw.

Sogenannte "Checkin, Checkout" (CI-CO) eTicketing-Systeme, wie etwa die Londoner Oyster-Karte, oder das "Touch & Travel" System der Deutschen Bundesbahn, bedürfen auch einer erheblichen Infrastruktur. Abgesehen von den zahlreichen RFID-Chip-Lesern, Beacons, sonstiger Hardware und deren entsprechenden Vernetzung, bedürfen solche Systeme einer speziellen Infrastruktur z.B. für die Ausstellung, sowie für die Aufladung der Karten. Der Unterhalt einer solchen Infrastruktur ist sehr kostspielig. Haltestellen und/oder Fahrzeuge müssen mit besonderer Hardware ausgestattet werden. Will man eine weitere Haltestelle oder Fahrverbindung aufschalten, so muss diese zuerst mit der notwendigen Hardware ausgestattet werden.

In der deutschen Patentanmeldung DE10147788A1 wurde ein System beschrieben, in welchem ein Mobiltelefon des Reisenden seine Position anhand der Funkzellen des Mobilfunknetzes ermittelt. Eine GPS-Positionierung wird wegen ihrer Feinkörnigkeit als mögliche Alternative vorgeschlagen. Beim Check-In bietet das System lediglich zwei Möglichkeiten: entweder kann eine einzige Haltestelle identifiziert werden, in welchem Fall diese als Abfahrtstation übernommen wird, oder es kommen mehrere Haltestellen in Betracht, in welchem Fall diese dem Reisenden in einer Liste zur Auswahl angezeigt werden. Somit bietet das System keine völlig automatische Check-In-Möglichkeit. Zudem liesse sich das System nur mit grosser Schwierigkeit auf sehr unterschiedliche Verkehrsnetze oder sonstige Dienstleistungen ausweiten.

In der internationalen Anmeldung WO2008116587A1 wird ein System beschrieben, in welchem eine Art Wegerkennungssystem durch das Mobilgerät des Reisenden, ebenfalls auf Basis der Funkzellen, ausgeführt wird. Für die Wegerkennung wird die Identität der Basisstation jeder Mobilfunkzelle ermittelt. Aufgrund der Identität der Basisstation kann die Wahrscheinlichkeit berechnet werden, ob sich der Reisender in einer bestimmten Verkehrsnetzverbindung befindet. Die eigentliche Position des Mobilgeräts wird nicht ermittelt, was die Flexibilität des Systems, wie beim System von DE10147788A1, wesentlich beeinträchtigt.

Die Europäische Patentanmeldung EP1669935A1 beschreibt ein System in welchem Positions- und Bewegungsinformationen des Fahrzeugs und des Reisenden miteinander verglichen werden, um zu ermitteln, ob der Reisender sich im Fahrzeug befindet. Das System bedarf jedoch einer Hardware im Fahrzeug, was zu erheblichen Kosten sowie einer Inflexibilität des Systems führt.

In der Europäischen Patentanmeldung EP2905747A1 wird ein System vorgeschlagen, in welchem der Einstiegsort und der Ausstiegsort des Mobilgeräts (z.B. die Koordinaten der Basisstation, an welchem das Mobilgerät angeschlossen ist) aufgezeichnet und nachträglich per SMS an einen Server zur Verrechnung gesendet werden. Das System eignet sich nur für Anwendungen wie z.B. Skilifts, wo der Einstiegs- bzw. Ausstiegsort unmittelbar von der Position des Mobilgeräts einzig identifiziert werden kann.

Grundsätzlich haben solche herkömmlichen eTicketing-Systeme den Nachteil, dass sie sich mit sehr unterschiedlichen Arten von Verkehrs- oder sonstige Dienstleistungsanbietern, zum Beispiel dem Individualverkehr, Luftlinien oder Car Sharing-Systeme nur schwer verknüpfen lassen. Ferner sind sie für Ihre Positionierung meistens auf eine bestimmte Infrastruktur (zum Beispiel Mobilfunkzellen) angewiesen, was die Vielfalt der möglichen Anwendungsmöglichkeiten des Systems erheblich beeinträchtigt.

Die US 2011/0060600 A1, die US 2010/0197325 A1, die US 2013/0185123 A1 und die EP 3 109 8181 A1 betreffen Systeme, bei denen anhand von Positionsdaten eines Mobilgeräts eine von einem Nutzer befahrene Netzverbindung zum Zweck der Vergebührung ermittelt wird. Die US 2015/0296334 A1 offenbart die Verwendung von Positionsdaten von Mobilgeräten um eine Verkehrsnetzauslastung zu ermitteln.

Somit besteht Bedarf an einem System bzw. Verfahren, welches dem Reisenden eine vereinfachte Nutzung des Verkehrsnetzes ermöglicht, welches ihm die Nutzung der Dienstleistungen zweier oder mehrerer ganz unterschiedlicher Dienstleistungsanbieter mit einer gemeinsamen App auf seinem Mobilgerät ermöglicht, und welches es dem Verkehrsbetrieb bzw. den Verkehrsbetrieben ermöglicht, diese vereinfachte Nutzung von ungleichartigen Netzen bzw. Dienstleistungsanbietern zu gewährleisten, jedoch ohne spezielle Hardware bereitstellen zu müssen.

### Kurze Beschreibung der Erfindung

Die Erfindung sieht eine Back-End Server-Einrichtung gemäss Anspruch 1 vor. Weitere Varianten der Erfindung sind in den abhängigen Ansprüchen definiert. Die Beschreibung umfasst ferner ein Verfahren zur automatischen Berechnung, mittels einer nachstehend bzw. in den Ansprüchen beschriebenen Back-End Server-Einrichtung, der Nutzung eines Verkehrsnetzes durch einen Verkehrsteilnehmer, wobei das Verkehrsnetz eine Mehrzahl von Knoten aufweist, und wobei die Nutzung das Befahren mindestens einer Netzverbindung zwischen Knoten des Verkehrsnetzes umfasst, wobei:
- sukzessive, von einem Mobilgerät des Verkehrsteilnehmers an die Back-End Server-Einrichtung übertragene Positionsmeldungen durch eine Wegerkennungseinheit der Back-End Server-Einrichtung empfangen werden, wobei die Positionsmeldungen die geografische Position des Mobilgeräts umfassen, und
- anhand der genannten Positionsmeldungen, mindestens ein Startknoten und ein Endknoten der mindestens einen befahrbaren Netzverbindung automatisch mittels eines Wegsuche-Algorithmus von der Wegerkennungseinheit automatisch identifiziert werden.

Ebenso umfasst die Beschreibung ein Verfahren zur Übertragung, mittels eines nachstehend beschriebenen Mobilgeräts, von geografischen Positionen des Mobilgeräts an eine Wegerkennungseinheit einer nachstehend bzw. in den Ansprüchen beschriebenen Back-End Server-Einrichtung, wobei sukzessive, durch das Mobilgerät ermittelte geografische Positionen des Mobilgeräts über eine drahtlose Kommunikationsnetz an die Wegerkennungseinheit übermittelt werden, wobei die übermittelten geografischen Positionen mindestens eine Ein- und eine Ausstiegspositionsmeldung umfassen.

Die oben erwähnte Aufgabe wird insbesondere durch die automatische Wegerkennungseinheit der erfinderischen Back-End Server-Einrichtung erreicht, wobei die Wegerkennungseinheit, anhand der von dem Mobilgerät (z.B. Smartphone) des Verkehrsteilnehmers an die Back-End Server-Einrichtung übertragenen Positionsmeldungen die Nutzung des Verkehrsnetzes durch den Verkehrsteilnehmer automatisch nachvollziehen kann. Somit kann diese automatische Erkennung im Wesentlichen ohne spezielle, sich im "Front-End" (Reisender-seitig) befindende Hardware erfolgen, und die erkannte Nutzungsinformationen können für eine (z.B. optimierte) Vergebührung benützt werden. Dank der Anwendung reeller geografischen Positionsinformationen des Mobilgeräts, kann die Ortung des Reisenden auf sehr flexible Weise erfolgen, und zwar mittels jeglichem verfügbaren Ortungssystem (GPS, WLAN, Mobilnetz...). Ferner lässt sich das System sehr flexibel an weitere, heterogene Arten von Verkehrsnetzen oder sonstige ortsbezogene Dienstleistungen anpassen. Es können ein Self-Drive-Car-Service (SDCS), eine Luftlinie und ein Ride-Sharing-Service als Verkehrsmöglichkeiten an die Back-End Server- angeschlossen werden, zum Beispiel. In diesem Fall können nebst einem öffentlichen Verkehrsnetz auch die Abholorte des SDCS, die Flugverbindungen der Luftlinie und die verfügbaren Rides des Ride-Sharing-Service als Netzknoten (bei Bedarf auch dynamisch aktualisiert) dargestellt und von der Wegerkennungseinheit mitberücksichtigt werden. Somit kann ein Reisender, der zu Hause sitzt, bereits sein Check-In (z.B. manuell) tätigen. Ein SDCS-Car wird automatisch gerufen, bringt ihn zur nächsten ÖV-Haltestelle, wo er in einen Zug Richtung Flughafen steigt. Am Flughafen nimmt er die nächste verfügbare Maschine. Am Zielflughafen wartet schon ein Fahrzeug eines Ride-Sharing-Service, welches ihm zum Zielort bringt. Die ganze Reise kann mit einer einzigen Fahrberechtigung, die ihm durch eine App in seinem Mobilgerät gewährleistet ist, erfolgen. Bei seiner Ankunft am Zielort, oder am Ende des Tages, werden die verschiedenen Dienstleistungen zusammengerechnet (vorzugsweise zum tiefst möglichen Tarif) und zum Beispiel seiner Kreditkarte belastet.

In diesem Text bezieht sich der allgemeine Begriff «System» auf ein System, welches eine erfindungsgemässe Back-End Server-Einrichtung und ein erfindungsgemässes Mobilgerät umfasst. Die Begriffe «Back-End-System» und «Back-End Server-Einrichtung» beziehen sich auf ein Back-End-System, das eine erfindungsgemässe Back-End Server umfasst, und mit welchem ein Front-End (z.B.
eine Applikation eines oder mehrerer erfindungsgemässen Mobilgeräte kommunizieren können.

Die Erfindung wird anhand der beigelegten Zeichnungen beschrieben, in welchen:
Figur 1 zeigt eine schematische topologische Darstellung eines Verkehrsnetzes, in welchem die Erfindung angewendet werden kann.
Figur 2 zeigt in einem schematischen Blockdiagramm ein erstes Beispiel eines erfindungsgemässen Systems.
Figur 3 zeigt eine erste Variante eines erfindungsgemässen Systems mit Systemelementen zur Optimierung von Tarifen.
Figur 4 zeigt eine zweite Variante eines erfindungsgemässen Systems mit Systemelementen zur Validierung der Positionsmeldungen.
Figur 5 zeigt eine dritte Variante eines erfindungsgemässen Systems mit Systemelementen zur automatischen Erkennung von Start- und Endknoten einer von dem Verkehrsteilnehmer befahrenen Netzverbindung.
Figur 6 zeigt eine vierte Variante eines erfindungsgemässen Systems mit funktionellen Elementen des Mobilgeräts zur automatischen Erkennung von Start- und Endknoten einer von dem Verkehrsteilnehmer befahrenen Netzverbindung.

Die beigefügten Zeichnungen sind lediglich als illustrative Beispiele vorgesehen, welche dem besseren Verständnis der Erfindung dienen. In den Zeichnungen werden gleiche Bezugszeichen für identische oder funktionsähnliche Elemente verwendet. Die Verwendung unterschiedlicher Zeichnungen bedeutet jedoch nicht, dass die angedeuteten Merkmale unterschiedlich sind.

### Detaillierte Beschreibung der Erfindung

In der folgenden detaillierten Beschreibung werden Ausführungsbeispiele der Erfindung beschrieben. Der Begriff "-einheit" wird verstanden als ein funktioneller Bauteil (Hardware und/oder Software), welcher zum Beispiel aus mehreren körperlichen z.B. elektronischen Bauteilen bestehen kann. Der Begriff "Verkehrsnetz" kann ein ÖV-Netz oder ein Strassennetz oder ein sonstiges Netz umfassen, durch welches ein Verkehrsteilnehmer befördert werden kann. Zwecks Verständlichkeit dieses Textes werden Begriffe wie "Verkehrsteilnehmer" als maskulin aufgeführt, obwohl selbstverständlich keine geschlechtsspezifische Person gemeint ist.

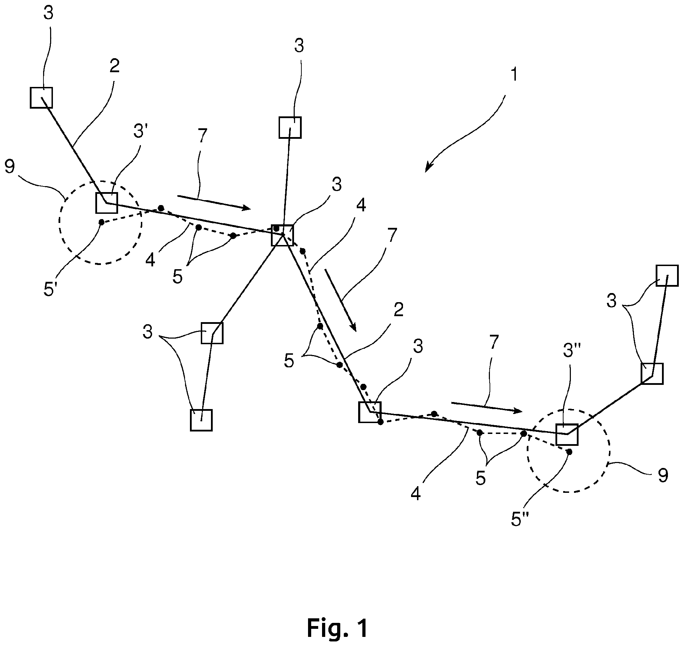

Figur 1 zeigt ein vereinfachtes Beispiel eines Verkehrsnetzes 1. In diesem Beispiel kreuzen sich zwei Verkehrsstrecken, welche jeweils aus mehreren Netzknoten 3 und Netzkanten 2 bestehen. Die Netzknoten 3 und -kanten 2 können statische Tram-, Bus- oder Bahnhaltestellen und deren Verbindungen entsprechen, zum Beispiel, oder sie können dynamische (zeitabhängige) Fahrten eines Fahrplans darstellen. Mit anderen Worten kann ein Knoten 3 einen geografischen Ort (z.B. eine Haltestelle) oder ein Ereignis (z.B. die Abfahrt eines Busses um eine bestimmte Zeit) entsprechen. Eine Netzverbindung kann eine statische Verbindung (z.B. Bahngeleise, Strasse) oder eine zeitliche Verbindung (z.B. die Dauer einer Fahrt zwischen benachbarten Haltestellen) entsprechen.

Ein Verkehrsteilnehmer (Reisender) bewegt sich zwischen einem Startknoten 3' und einem Endknoten 3" des Verkehrsnetzes 1 in der durch die Pfeile 7 angedeuteten Richtung. Der Reisender trägt ein erfindungsgemässes Mobilgerät, welches konfiguriert ist, um sukzessive Positionsmeldungen 5 an die erfindungsgemässe Back-End Server-Einrichtung (z.B. des Verkehrsunternehmens) zu übertragen. Vorzugsweise erfolgt die Übertragung der Positionsmeldungen 5 drahtlos, z.B. über eine mobile Datenverbindung (mobiles Internet) zwischen dem Mobilgerät und der Back-End Server-Einrichtung, oder z.B. über eine im Fahrzeug vorhandene WLAN-Verbindung. Jede Positionsmeldung 5 umfasst mindestens eine geografische Position (z.B. einen Längengrad und einen Breitengrad) des Mobilgeräts, mit einem Zeitstempel. Bei Bedarf können die Positionsmeldungen einen Höhenparameter umfassen, damit z.B. zwischen übereinander liegenden Bahnen unterschieden werden kann. Die Positionsmeldungen eines Tracks enhalten ferner eine eindeutige Session- bzw- Track-ID. Die Positionsinformationen können durch das Mobilgerät aus einer oder mehrerer Quellen ermittelt werden, wie z.B. GPS, WLAN, Funkzellen und/oder einen Beschleunigungssensor zum Detektieren von Bewegungsänderungen.

Wie aus der Figur 1 ersichtlich ist, fallen die Positionsmeldungen 5 des Mobilgeräts ggfs. nicht genau mit den Knoten 3 des Verkehrsnetzes 1 zusammen. Die Positionsmeldungen 5 bilden einen scheinbar befahrenen Weg 4 (gestrichelt angezeigt, nachstehend auch "Track" genannt), welcher mit den tatsächlichen Netzknoten 3 und Verbindungen 2 verglichen und geeinigt werden, um die reelle Nutzung des Verkehrsnetz 1 zu ermitteln.

Für die Verbindungssuche können aufgezeichnete Koordinaten 5 (Track 4) und Fahrplanverbindungsdaten 3 verwendet werden. Die Verbindungsdaten 3 liegen z.B. als einzelne Haltestellen vor, welche jeweils Angaben zu den abgehenden Verbindungen enthalten. Als eine Verbindung 2 wird ein Verbindungsschritt von einer Haltestelle 3 zur unmittelbar nächsten Haltestelle 3 betrachtet. Die Lösung des Wegsuche-Algorithmus wird als minimaler Pfad bezeichnet - also eine Verbindung von einer Start- zu einer Zielhaltestelle oder eine Reihe von Verbindungen, welche den Trackverlauf mit der geringsten zeitlichen und räumlichen Distanz abbilden.

Verschiedene Kostenfunktionen können verwendet werden, um die plausibelste Korrespondenz zwischen einer oder mehreren Positionsmeldungen (Trackkoordinaten) 5 und den Netzknoten 3 zu ermitteln. Hier wird der Begriff "Kostenfunktion" in seinem mathematischen Sinne verstanden, wobei z.B. ein oder mehrere "Kosten"-Parameter eventuell gewichtet und heuristisch ausgewertet werden, um zu einem plausibelsten Parameterwert bzw. zu einem plausibelsten Satz der Parameterwerte zu gelangen. Als Beispiel kann die Distanz von einem Startpunkt 5' oder einem Endpunkt 5" des Tracks 4 zu umliegenden Haltestellen genommen werden. Solche Distanzen sind als gestrichelte Kreise 9 in Figur 1 angezeigt. Die Kosten können auch umgekehrt ermittelt werden, indem die minimale zeitliche und räumliche Distanz eines Verbindungsanfangs 3' bzw. -ende 3" zum Track 4 berechnet wird. Die Kosten für eine mögliche Verbindung setzen sich zusammen aus der Distanz (örtlich und zeitlich) des Tracks 4 zu Start- und Zielpunkt der Verbindung .

Die Wartezeit an einer Haltestelle und/oder der Bedarf für einen Umstieg können in Betracht gezogen werden. Wird an einer Haltestelle lange gewartet, das heisst ist eine Folgeverbindung zeitlich weit entfernt von der vorangehenden Verbindung, so werden zusätzliche Kosten fällig. Zusätzliche Kosten können auch bei einem Fahrzeugwechsel oder einem Umsteigen fällig werden.

Der Wegsuche-Algorithmus wird vorzugsweise heuristisch, zum Beispiel gemäss einem Dijkstra oder einem A* Algorithmus ausgeführt. Ein Beispiel des Algorithmus ist am Ende dieser Beschreibung angegeben.

Für den Startpunkt 5' und Endpunkt 5" des Tracks 4 können Haltestellen 3 gesucht werden, die sich in einem bestimmten Perimeter 9 befinden. Falls sich keine Haltestellen im Perimeter 9 befinden, kann der Perimeter 9 solange vergrössert (z.B. verdoppelt) werden, bis mindestens eine Haltestelle 3' gefunden wird. Die gefundenen Start- und Endhaltestellen können heuristisch nach ihren Kosten (in diesem Fall die Entfernung zum Startpunkt 5' bzw. Endpunkt 5" des Tracks 4) sortiert werden.

Positionsmeldungen können in (z.B. regelmässigen) zeitlichen Abständen, wie zum Beispiel einmal pro Minute an den Back-End-Server übermittelt werden. Jede Zwischenmeldung im Track enthält somit eine geografische Position (Längengrad, Breitengrad, evtl. auch Höhe) sowie einen Zeitstempel. Meldungen werden üblicherweise in Echtzeit übertragen. Vorzugsweise können sie jedoch nachträglich übertragen werden, wie z.B. bei einem Unterbruch der Kommunikation bzw. Akku-Ausfall des Mobilgeräts. Auf diese Weise können das Mobilgerät 8 und der Server asynchron und bei Bedarf auch ohne direkte Zwischenkommunikation funktionieren. Der Reisender kann sein Mobilgerät als E-Ticket verwenden, und zwar auch dann, wenn sein Gerät nicht gerade über eine Netzverbindung verfügt, denn die Reisedaten können nachträglich auf dem Server hochgeladen werden. Gleichermassen ist der Server nicht auf eine ständige Kommunikation mit dem Mobilgerät angewiesen; vorzugsweise arbeitet er rein passiv, indem er einfach die Daten bearbeitet, die bei der Empfangseinheit eingehen. Im letzteren Fall kann die Zwischenkommunikation ganz oder weitgehend in einer Richtung, vom Mobilgerät zum Server sein. Dank der geringen Kommunikation zwischen den Mobilgeräten und dem Back-End-Server wird die Datenverkehr verringert, die Sicherheit erhöht, und eine Anonymität des Reisenden ermöglicht. Eine Positionsmeldung kann gelöscht werden (z.B. unmittelbar) nachdem sie erfolgreich an den Back-End-Server übermittelt worden ist. Alternativ können die Positionsmeldungen eines Tracks erst dann gelöscht werden, nachdem alle Positionsmeldungen des beendeten Tracks erfolgreich an den Back-End-Server übermittelt worden sind.

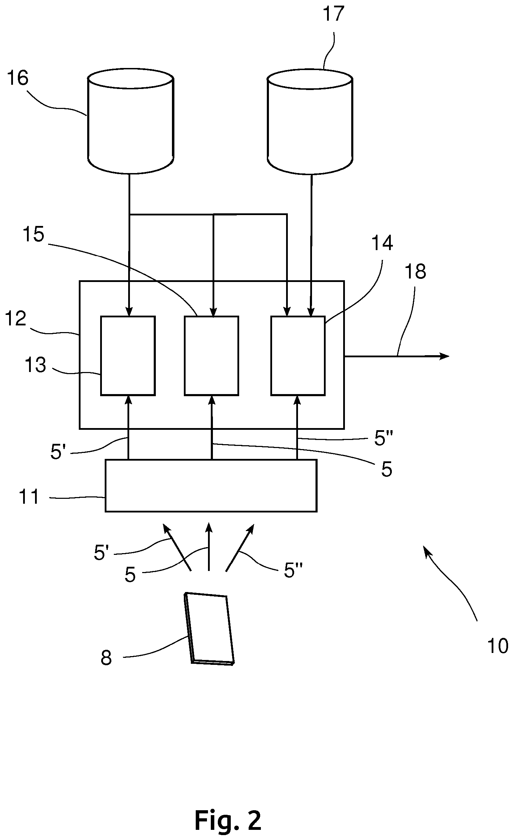

Figur 2 zeigt ein Beispiel eines erfindungsgemässen Systemaufbaus 10. Eine Empfängereinheit 11 dient zum Empfang von Positionsmeldungen 5, 5', 5" des Mobilgeräts 8. Mobilgerät 8 kann ein Mobiltelefon sein, z.B. mit einer speziellen App und/oder einer API-Schnittstelle, mittels welcher API-Schnittstelle die aktuelle Position 5, 5', 5" des Mobilgeräts anhand von GPS-, WLAN, Funknetz-, Beschleunigungssensor-Daten ermittelt werden kann. Das Mobilgerät 8 ist so konfiguriert , dass der Verkehrsteilnehmer (z.B. mittels der App), eine Start-und optional eine Stoppmeldung an das Back-End-System 10 senden kann. Das manuelle Senden einer Start- bzw. Stoppmeldung löst das Wegsucheverfahren, das nachstehend erklärt wird, aus bzw. beendet dieses.

Das Mobilgerät 8 verfügt (etwa in der App abgespeichert) über Informationen zu den Stationen des Verkehrsnetzes sowie zu deren geografischen Positionen. Beim Check-In und/oder Check-Out kann die App bzw. die Rechnereinheit des Mobilgeräts somit die Start- bzw. Stoppstation aufgrund der aktuellen geografischen Position des Mobilgeräts und der geografischen Positionsinformationen der Stationen die Identität der Station ermitteln, an welche das Check-In bzw. Check-Out stattfindet und eine entsprechende Station-ID mit der Start- bzw. Stoppmeldung an den Back-End-Server übermitteln. Bei Bedarf, zum Beispiel falls die App keine eindeutige Station aus zwei oder mehreren Stationen ermitteln kann, wird eine Auswahl- bzw. Bestätigungseingabe des Reisenden ersucht.

Die Empfängereinheit 11 kann zum Beispiel eine IP-Schnittstelle aufweisen, zum Empfang der Positionsmeldungen 5, 5', 5" und ggfs. die Start- und Stoppmeldungen über das Internet und zum Weiterleiten der Positionsmeldungen an eine Wegerkennungseinheit 12, welche anhand der Positionsmeldungen und anhand von in Wissensdatenbanken 16, 17 abgespeicherten Netzverbindungsangaben des Verkehrsnetzes 1 die plausibelsten Netzknoten (z.B. Haltestellen) 3 ermittelt, die den Positionsmeldungen 5 , 5', 5" entsprechen.

In der ersten Wissensdatenbank 16 sind statische (z.B. geografische und topologische) Daten des Verkehrsnetzes 1 abgespeichert. In der zweiten Wissensdatenbank 17 sind dynamische (zeitliche) Daten der Netzverbindungen, z.B. Fahrplaninformationen und/oder Echtzeit-Daten der tatsächlich fahrenden/gefahrenen Verbindungen, von den einzelnen Fahrten des Verkehrsnetzes abgespeichert. Gemäss einer Variante können die statischen und dynamischen Daten der Wissensdatenbanken 16, 17 in einer gemeinsamen Wissensdatenbank kombiniert werden.

Die Wegerkennungseinheit 12 dient zur Ausführung der oben erwähnten Wegsuche-Algorithmus mittels einer ersten Knotenerkennungseinheit 13 zur Ermittlung des Startknoten 3' und einer zweiten Knotenerkennungseinheit 14 zur Ermittlung des Endknoten 3". In diesem Beispiel weist die Wegerkennungseinheit 12 auch eine dritte Knotenerkennungseinheit 15 auf, welche gegebenenfalls zur Ermittlung von Zwischenknoten 3 der befahrenen Netzverbindung 2 dient, falls solche Zwischenknoten 3 vorhanden sind. Die erste und zweite und ggfs. dritte Knotenerkennungseinheiten 13, 14, 15 können den gleichen Algorithmus oder ähnliche Algorithmen verwenden, um den Start-, End- bzw. Zwischenknoten der befahrenen Netzverbindung(en) 2 zu ermitteln. Ein praktisches Beispiel eines solchen Algorithmus ist am Ende dieser Beschreibung angegeben. Ergebnis des Althorithmus umfasst z.B. Start- und Endknoten der befahrene(n) Strecke(n), eine Reihenfolge der befahrenen Zwischenknoten (etwa Stationen/Haltestellen) und/oder der Befahrenen Netzverbindungen, und wird "Trip" genannt.

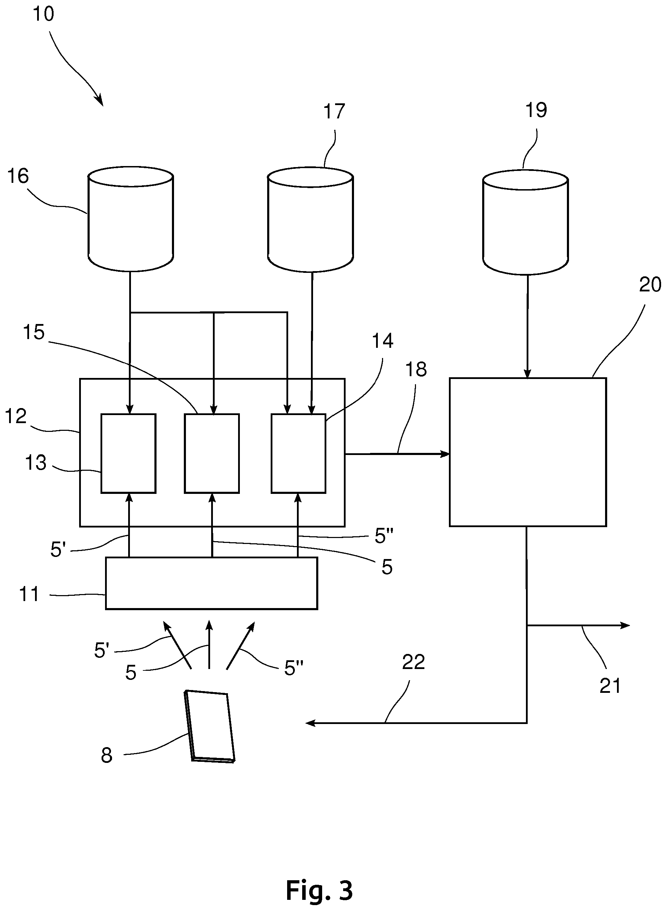

Am Ausgang 18 der Wegerkennungseinheit 12 ist der berechnete Trip (z.B. die Koordinaten der gewonnenen Start- und Endknoten 3', 3", sowie ggfs. der Zwischenknoten 3) bereitgestellt. Diese Trip-Informationen können zum Beispiel zur Berechnung eines optimalen Reisetarifs verwendet werden, wie unten im Zusammenhang mit der Figur 3 beschrieben wird.

Figur 3 zeigt das System von Figur 2, wobei die erwähnten Knotenkoordinaten 3, 3', 3" an eine Selektionseinheit 20 übertragen werden. Die Selektionseinheit 20 dient dazu, einen optimalen (z.B. den tiefsten) Tarif bzw. eine optimale Tarifkonstellation aus mehreren möglichen Tarifen und Tarifkonstellationen, die in der dritten Wissensdatenbank 19 abgespeichert sind, zu ermitteln. Diese Tarifinformation kann zum Beispiel zu Verrechnungszwecken 21 verwendet werden. Alternativ kann das Mobilgerät so konfiguriert sein, dass der Verkehrsteilnehmer eine Abfragemeldung an das Back-End-System (z.B. mittels der App) senden kann, worauf eine provisorische Tarifoptimierung durch die Selektionseinheit 20 durchgeführt wird, und das Ergebnis 22 wieder an das Mobilgerät, zum Beispiel zur Anzeige an den Verkehrsteilnehmer gesendet wird.

Die Selektionseinheit 20 kann so konfiguriert sein, dass alle der befahrenen Netzverbindungen des Verkehrsteilnehmers (bzw. des Mobilgeräts) innert eines bestimmten Zeitfensters (z.B. ein Tag, oder eine Woche) für die Tarifoptimierung berücksichtigt werden. Auf diese Weise kann der Verkehrsteilnehmer sicherstellen, und zwar ohne sich darum zu kümmern, dass er immer den optimalen Tarif für seine Nutzung des Verkehrsnetzes bezahlt. Vor Antritt eines Reisetages oder anderer Zeitperiode weiss der Kunde oftmals nicht, welches Ticket oder Kombination von Tickets unter dem Strich am günstigsten ist/sind. Deshalb werden einzelne Tarife für Tickets unter dem Strich am günstigsten ist/sind. Deshalb werden einzelne Tarife für getätigte Reisen einer bestimmten Zeitperiode (z.B. eines Betriebstages) erst nach Abschluss der Zeitperiode kumuliert und gemäss dem günstigsten Tarif bzw. den günstigsten Tarifen für diese Reisen verrechnet. Zum Beispiel ist ab einer gewissen Distanz oder Anzahl Einzelfahrten eine entsprechende Tageskarte günstiger als Einzeltickets. Oder ein Zonenticket ist noch eine Weile gültig, der Kunde ist sich dessen aber nicht bewusst und könnte damit ebenfalls zurückreisen. Da nebst dem genauen Reiseprofil auch die Zeit bekannt ist, kann der optimale Tarif mittels der Selektionseinheit 20 im Nachhinein ermittelt werden. Die Optimierung (Selektion) kann auf Ankunft am Zielknoten 3" automatisch ausgelöst werden, oder manuell, durch den Verkehrsteilnehmer mit seinem Mobilgerät, oder automatisch am Ende des entsprechenden Zeitfensters.

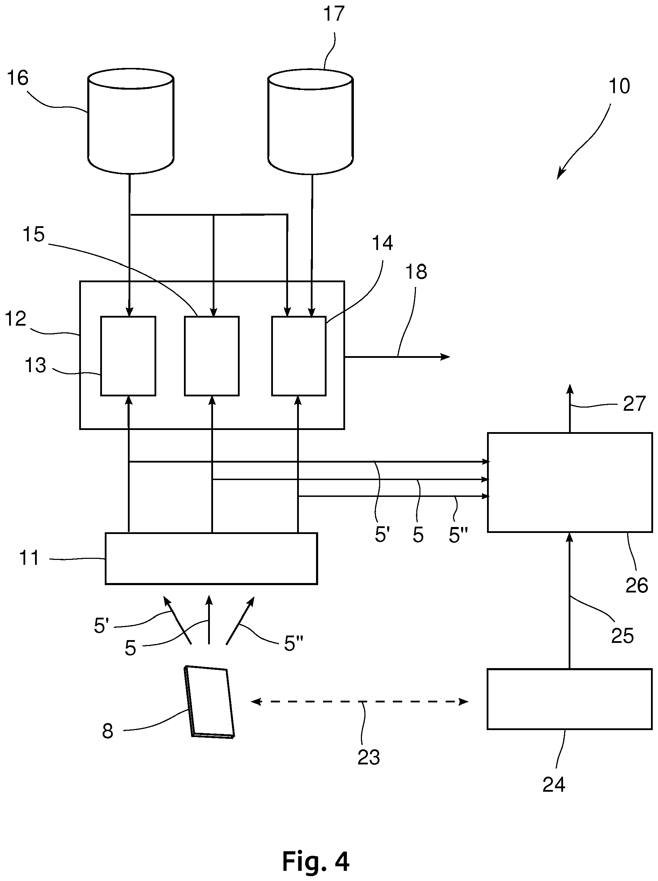

Figur 4 zeigt eine weitere Variante des erfindungsgemässen Systems, wobei Ortungsdaten 25 von einem Telefonanbieter 24 des Mobilgeräts als Validierungskontrolle für die vom Mobilgerät angegebenen Positionsmeldungen verwendet werden können. Bei der Reisewegermittlung kann es Fälle geben, wo die Lokalisierungsinformationen auf der Basis des Mobilgeräts (Smartphone) gegen eine zweite Lokalisierungsquelle geprüft werden müssen. Sei dies um manuelle Korrekturen der Reiseroute durch den Kunden validieren zu können, zufällig ausgewählte Stichproben durchzuführen oder in Verdachtsfällen eine fälschungssicherere Reiseroute als Beweismittel zu erhalten. Eine Kontrolleeinheit 27 ist so konfiguriert, auf Grundlage der von der Wegerkennungseinheit 12 ermittelten Reiseroute 18 eine Wahrscheinlichkeitswert 27 zu erstellen, welcher andeutet, ob der Reisender die angegebene Strecke wirklich gefahren ist oder nicht.

Nebst der Validierung mittels Telefon-Netzdaten kann geprüft werden, wie gross die Abweichungen manueller Korrekturen sind. Alternativ können auch Reiseweganalysen durchgeführt werden, um z.B. unnatürliche Lücken zu identifizieren und genauer zu prüfen.

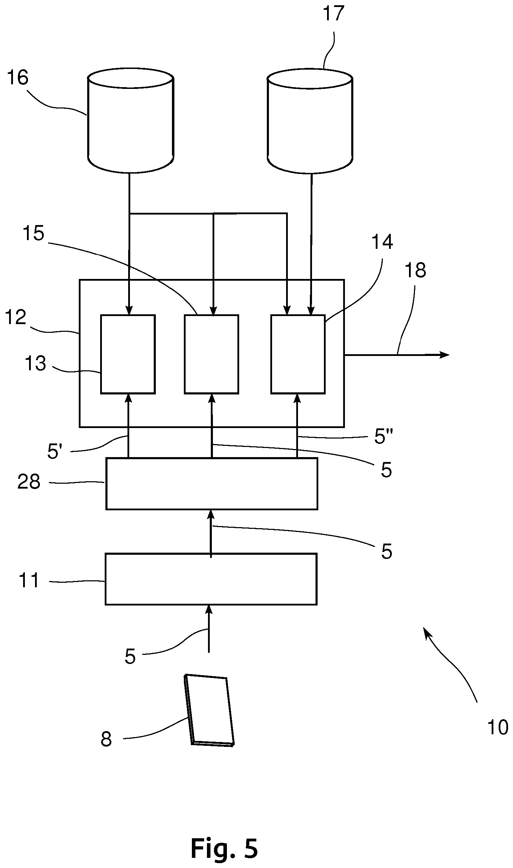

Figur 5 zeigt eine weitere Variante des erfindungsgemässen Systems 10, wobei, anstatt der (oder zusätzlich zu den) o.g. manuellen Start- und Stoppmeldungen, der Einstieg 5' und der Ausstieg 5" des Verkehrsteilnehmers automatisch erkannt werden. Zu diesem Zweck wird das System 10 mit einem Mustererkennungseinheit 28 ausgestattet. Die Mustererkennungseinheit 28 ist so konfiguriert, dass sie bestimmte Bewegungsmuster aus den Positionsmeldungen 5 erkennen kann, welche Bewegungsmuster einen Einstieg oder Ausstieg des Verkehrsteilnehmers wahrscheinlich darstellen. Bei Erkennung eines solchen Musters wird die entsprechende Start- bzw. Stoppmeldung 5', 5" an die Wegerkennungseinheit 12 automatisch übermittelt.

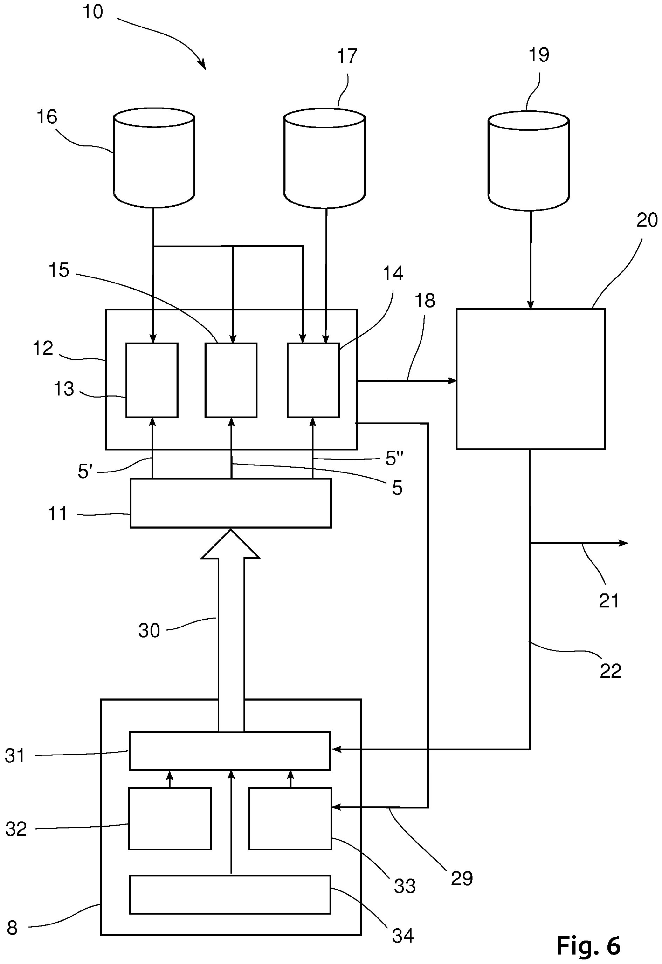

Figur 6 zeigt eine weitere Variante des erfindungsgemässen Systems, wobei das Mobilgerät 8 mit einer Detektionseinheit 34 ausgestattet ist. Die Detektionseinheit ist konfiguriert, um Sensoren, insbesondere den/die Beschleunigungssensor(en) des Mobilgeräts zu überwachen, und Änderungen in der Bewegungsart des Mobilgeräts 8 zu erkennen. Solche Änderungen können beim Einsteigen in ein Fahrzeug detektiert werden, da die Bewegung eines Beschleunigungssensors in einem Fahrenden Bus wesentlich anders ist, als diejenige in der Tasche einer laufenden oder stehenden Person. Erkennt die Detektionseinheit 34 eine Bewegungsänderung, die an den Ein-oder Ausstieg des Verkehrsteilnehmers deutet, so sendet das Mobilgerät eine entsprechende Meldung an das System 10. Alternativ kann die Detektionseinheit so konfiguriert werden, um sämtliche Ereignisse einer Bewegungsänderung an das Back-End System 10 zu übermitteln.

Figur 6 zeigt auch, wie das Mobilgerät 8 mit einer Ortungseinheit 32 und/oder einer Eingabeeinheit 33 ausgestattet werden kann. Die Ortungseinheit kann, wie oben beschrieben, die aktuelle Position des Mobilgeräts 8 ermitteln und diese an das Back-End System 10 mittels der Kommunikationseinheit 31 übertragen. Die Eingabeeinheit 33 (welche z.B. als eine Bedienerschnittstelle der o.g. App ausgeführt werden kann), dient zur Kommunikation mit dem System 10. Empfängt das System 10 eine Einstiegs-Positionsmeldung 5', zum Beispiel, so kann das System 10 eine Bestätigungsanfrage 29 an das Mobilgerät 8 senden 9, damit der Verkehrsteilnehmer den Einstieg bestätigen bzw. verneinen kann.

### Beispiel des Wegsuche-Algorithmus

Wie oben erwähnt kann ein Beispiel des Wegsuche-Algorithmus vorzugsweise gemäss einem Dijkstra oder einem A* Algorithmus ausgeführt werden. Ein Beispiel des Algorithmus wird nachstehend angegeben.

Die gefunden Starthaltestellen werden in eine Liste (auch offene Liste genannt) eingefügt und nach ihren Kosten (in diesem Fall die Entfernung zum Startpunkt des Tracks) sortiert.

Mit einer iterativen Graphsuche kann der minimale Pfad ermittelt werden. Über die Haltestellen in der offenen Liste wird nun solange iteriert, bis diese leer ist:
- Offene Liste nach Kosten der Haltestellen sortieren.
- Die Haltestellen mit den geringsten Kosten der offenen Liste entnehmen.
- Falls bereits ein minimaler Pfad für den gegebenen Track gefunden wurde und die entnommene Haltestellen grössere Kosten aufweisen als die Gesamtkosten des minimalen Pfades, so wird die Haltestelle einfach von der offenen Liste entfernt und mit einer nächsten Iteration begonnen.
- Andernfalls wird die Haltestelle einer anderen Liste hinzugefügt (geschlossene Liste).
- Alle möglichen Verbindungen an der Haltestelle werden nun im Schritt "Expand Node" überprüft und, wenn gültig, in die offene Liste übernommen.

Ungültig sind folgende Verbindungen:
o Eine Zielhaltestelle einer Verbindung ist mit einer gegebenen Ankunftszeit bereits in der geschlossenen Liste.
o Die Verbindung verkehrt gemäss Fahrplandaten am Tag der Track-Aufzeichnung nicht.

Falls sich eine Verbindung (respektive ihre Zielhaltestelle) bereits in der offenen Liste befindet und die beiden Verbindungen zur selben Linie gehören, wird nur diejenige mit den geringeren Kosten berücksichtigt. Entweder wird die aktuelle Verbindung verworfen, oder die in der offenen Liste gefundene wird entfernt.

Falls sich die Haltestelle 3" im Endperimeter 9 befindet, werden die bisher aufsummierten Kosten der Verbindungsschritte 2 mit der Distanz der Haltestelle 3" zum Endpunkt 5" addiert und als minimaler Pfad gespeichert. Falls bereits ein minimaler Pfad existiert, wird der neu gefundene Pfad nur gespeichert, falls die Gesamtkosten geringer sind.

Es werden nun alle von dieser Haltestelle 3" ausgehenden Verbindungen 2 gesucht und die Kosten für die Verbindungen 2 berechnet. Damit bereits einmal abgearbeitete Verbindungen 2 nicht erneut in Betracht gezogen werden, wird überprüft, ob sich die Verbindung bereits in der geschlossenen Liste befindet. Falls nicht, so wird die Verbindung in die offene Liste eingefügt.

Da es theoretisch Vorkommen kann, dass es keine Fahrplanverbindung von der Start- zur Endhaltestelle gibt, gibt es auch eine zeitliche Abbruchbedingung, d.h. wird innerhalb einer bestimmten Zeit kein Pfad durch den Graph gefunden, bricht die Wegsuche ohne Resultat ab.

Gemäss einer weiteren Variante wird die Näherungsberechnung der Distanz, die Abnahme des Umfangs der Breitenkreise mit zunehmender Breite, z.B. zwischen 45.8° und 47.8° nördlicher Breite, als linear betrachtet.

Gemäss einer weiteren Variante werden nur Haltestellen berücksichtigt, die sich in einem (z.B. rechteckigen) Bereich um den Track befinden, welches den Track umspannt.

Gemäss einer weiteren Variante werden nur Verbindungen berücksichtigt, deren Abfahrtszeiten nach der Ankunftszeit der vorhergehenden Verbindung liegen.

Gemäss einer weiteren Variante, um die Anzahl der Verbindungen einzuschränken, wird festgelegt, dass eine Verbindung vor dem Track-Ende starten und nach dem Track-Beginn enden muss.

## Patentansprüche

1. Back-End Server-Einrichtung (10) zur automatischen Berechnung und Vergebührung der Nutzung eines Verkehrsnetzes (1) durch einen Verkehrsteilnehmer, wobei das Verkehrsnetz eine Mehrzahl von Knoten aufweist, und wobei
die Nutzung das Befahren mindestens einer Netzverbindung (2) zwischen mindestens zwei der Knoten des Verkehrsnetzes (1) umfasst;
**gekennzeichnet durch** eine Wegerkennungseinheit (12), welche dazu ausgebildet ist:
eine manuell durch den Verkehrsteilnehmer ausgelöste Startmeldung von einem Mobilgerät des Verkehrsteilnehmers zu empfangen, wobei die Startmeldung eine Station-ID einer Startstation der befahrenen Netzverbindung umfasst;
ausgelöst durch die Startmeldung, und anhand sukzessiver, vom Mobilgerät (8) des Verkehrsteilnehmers an die Back-End Server-Einrichtung übertragenen Positionsmeldungen (5, 5', 5", 30), die genannte mindestens eine vom Verkehrsteilnehmer befahrene Netzverbindung zwischen einem Startknoten und einem Endknoten, mit der geringsten zeitlichen und räumlichen Distanz zum Positionsmeldungsverlauf, sodass die plausibelsten Netzknoten ermittelt werden, die den Positionsmeldungen entsprechen, anhand eines ersten Wegsuche-Algorithmus automatisch zu identifizieren,
wobei die Positionsmeldungen die geografischen Positionen des Mobilgeräts (8) und einen Zeitstempel umfassen, und
wobei die befahrene Netzverbindung Netzknoten mindestens zweier unterschiedlicher Verkehrsmittel umfasst.

2. Einrichtung (10) gemäss Anspruch 1, welche:
- eine erste Speichereinheit (16) aufweist, in welcher geografische Ortsangaben und Knoten- und Verbindungsangaben der Netzverbindungen (2) als erste Wissensdatenbank wieder auffindbar abgespeichert sind,
- eine erste Knotenerkennungseinheit (14) aufweist, welche dazu ausgebildet ist, anhand einer vom Mobilgerät (8) an die Back-End Server-Einrichtung übertragenen Ausstiegspositionsmeldung (5", 30), anhand der ersten Wissensdatenbank (16) und anhand eines zweiten Wegsuche-Algorithmus, ein Endknoten (3") der mindestens einen befahrenen Netzverbindung (2) zu identifizieren.

3. Einrichtung (10) gemäss Anspruch 2, wobei die Wegerkennungseinheit (12) eine zweite Knotenerkennungseinheit (15) aufweist, die dazu ausgebildet ist, anhand mindestens einer Zwischen-Positionsmeldung (5, 30) empfangen vom Mobilgerät (8), anhand der ersten Wissensdatenbank (16) und anhand eines dritten Wegsuche-Algorithmus, mindestens einen Zwischenknoten (5) der mindestens einen befahrenen Netzverbindung zu identifizieren.

4. Einrichtung (10) gemäss Anspruch 3, welche eine zweite Speichereinheit aufweist, in welcher zweiten Speichereinheit Fahrplandaten der Netzverbindungen (2) als zweite Wissensdatenbank (17) wiederauffindbar abgespeichert sind, wobei die zweite Knotenerkennungseinheit (17) dazu ausgebildet ist, die Knoten der mindestens einen befahrenen Netzverbindung (2) anhand der Fahrplandaten zu identifizieren.

5. Einrichtung (10) gemäss einem der vorhergehenden Ansprüche, welche:
- eine dritte Speichereinheit aufweist, in welcher dritten Speichereinheit Tarife der Netzverbindungen (2) als dritte Wissensdatenbank (19) wiederauffindbar abgespeichert sind, und
- eine Selektionseinheit (20) aufweist, welche dazu konfiguriert ist, ein optimaler der abgespeicherten Tarife für die mindestens eine befahrbare Netzverbindung (2), oder eine optimale Konstellation der abgespeicherten Tarife für die mindestens eine befahrene Netzverbindung (2) zu ermitteln.

6. Einrichtung (10) gemäss Anspruch 5, wobei die Selektionseinheit (20) dazu ausgebildet ist, den optimalen Tarif bzw. die optimale Tarifkonstellation für alle vom Verkehrsteilnehmer innert eines vorbestimmten Zeitfensters befahrenen Netzverbindungen (2) zu ermitteln.

7. Einrichtung (10) gemäss einem der vorhergehenden Ansprüche, welche eine Kontrolleinheit (27) aufweist, welche dazu ausgebildet ist, anhand von Mobilnetz Ortungsdaten (25) des Mobilgeräts (8), eine örtliche und/oder zeitliche Abweichung der vom Mobilgerät (8) an die Back-End Server-Einrichtung übertragenen Positionsmeldungen (5, 5', 5", 30) von den entsprechenden Mobilnetz-Ortungsdaten (25) zu ermitteln.

8. Einrichtung (10) gemäss einem der vorhergehenden Ansprüche, welche eine Mustererkennungseinheit (28) aufweist, welche dazu konfiguriert ist, mindestens ein Bewegungsmuster der sukzessiven Positionsmeldungen (5', 5", 30), die einem Einstieg (5') oder Ausstieg (5") entsprechen, automatisch zu erkennen.

9. System zur automatischen Berechnung und Vergebührung einer durch einen Verkehrsteilnehmer befahrenen Netzverbindung, wobei das System umfasst:
eine Back-End Server Einrichtung gemäss einem der Ansprüche 1 bis 8, und
ein Mobilgerät (8) zur Kommunikation mit der Back-End Server-Einrichtung, welches eine Ortungseinheit (32) zur Ermittlung mindestens einer geografischen Positionen des Mobilgeräts aufweist, **gekennzeichnet durch** eine Kommunikationseinheit (31), welche dazu konfiguriert ist;
eine manuell durch den Verkehrsteilnehmer ausgelöste Startmeldung an die Wegerkennungseinheit (12) zur Auslösung der genannten Identifizierung der plausibelsten Netzknoten zu übermitteln, wobei die Startmeldung eine Station-ID einer Startstation der befahrenen Netzverbindung umfasst; und
sukzessive geografische Positionsmeldungen (5, 5', 5", 30) des Mobilgeräts (8) über ein drahtloses Kommunikationsnetz an die Wegerkennungseinheit (12) der Back-End Server-Einrichtung automatisch zu übermitteln, wobei jede der Positionsmeldungen mindestens die aktuelle geografische Position des Mobilgeräts (8) und einen Zeitstempel umfassen.

10. System gemäss Anspruch 9, wobei das Mobilgerät eine Detektionseinheit (34) aufweist, wobei die Detektionseinheit dazu konfiguriert ist, anhand von Beschleunigungssensordaten des Mobilgeräts (8), Änderungen in der Bewegungsart des Mobilgeräts zu detektieren und an die Wegerkennungseinheit (12) als Einstiegs- oder Ausstiegsmeldungen (5', 5") zu übermitteln.

11. System gemäss Anspruch 10, wobei die Kommunikationseinheit (31) dazu ausgebildet ist, die Übertragung der abgespeicherten geografischen Positionen manuell durch eine Eingabe des Verkehrsteilnehmers, automatisch bei einem Ausstieg (5") des Verkehrsteilnehmers, automatisch auf Erhalt einer Abfragemeldung (29) von der Wegerkennungseinheit (12), oder automatisch auf Ende eines vorbestimmten Zeitfensters auszulösen.

12. System gemäss Anspruch 11, wobei die Ortungseinheit (32) eine Eingabeschnittstelle (33) umfasst, welche dazu konfiguriert ist, eine manuelle Eingabe des Verkehrsteilnehmers als die genannte Ausstiegsmeldung (5', 5", 30) an die Wegerkennungseinheit (12) zu übermitteln.

13. System gemäss Anspruch 12, wobei:
die Eingabeschnittstelle (33) dazu ausgebildet ist, eine manuelle Abfragemeldung des Verkehrsteilnehmers an eine Tarif-Selektionseinheit (20) der Back-End Server Einrichtung zu übermitteln,
die Kommunikationseinheit (31) dazu ausgebildet ist, den durch die Selektionseinheit (20) ermittelten Tarif am Mobilgerät (8) zu empfangen, und
das Mobilgerät (8) eine Wiedergabeschnittstelle aufweist, welche dazu ausgebildet ist, den Verkehrsteilnehmer über den empfangenen Tarif zu informieren.

## Claims

1. Back-end server (10) for automatically calculating and billing the usage of a transport network (1) by a user of the network, wherein the network comprises a plurality of nodes, and wherein the usage includes travelling on at least one network connection (2) between at least two of the nodes of the transport network (1);
**characterised by** a path identification unit (12) configured to:
receive from a mobile device of the user a start message manually triggered by the user, the message including a station ID of a start station of the network connection travelled by the user;
triggered by the start message, and based on successive position messages (5, 5', 5", 30) transmitted by the user's mobile device (8) to the back-end server, using a first path search algorithm to automatically identify the said at least one network connection travelled by the user between a start node and an end node having the least temporal and spatial distance to the succession of position messages, such that the most plausible network nodes which correspond to the position messages are determined,
wherein the position messages each comprise the geographic position of the mobile device (8) and a time stamp, and
wherein the travelled network connection includes at least two different means of transport.

2. Server (10) according to Claim 1, which:
- comprises a first memory unit (16) in which geographical location information and node and connection information of the network connections (2) are retrievably saved as first knowledge base,
- comprises a first node identification unit (14), adapted to identify an end node (3") of the at least one travelled network connection (2), based on an exit position message (5", 30) transmitted from the mobile device (8) to the back-end server, and based on the first knowledge database (16), using a second path search algorithm.

3. Server (10) according to claim 2, wherein the path identification unit (12) comprises a second node identification unit (15), configured to identify at least one intermediate node (5) of the at least one travelled network connection based on at least one intermediate position message (5, 30) received from mobile device (8), based on the first knowledge database (16) using a third path search algorithm.

4. Server (10) according to claim 3, comprising a second memory unit in which second memory unit timetable data for the network connections (2) are stored in a retrievable form as second knowledge database (17), the second node detection unit (17) being configured to identify the nodes of the to identify at least one travelled network connection (2) based on the timetable data.

5. Server (10) according to one of the preceding claims, which:
- comprises a third memory unit, in which third memory unit tariffs of the network connections (2) are retrievably stored as third knowledge database (19) , and
- comprises a selection unit (20) configured to determine an optimal one of the stored tariffs for the at least one travelled network connection (2), or an optimal constellation of the stored tariffs for the at least one travelled network connection (2).

6. Server (10) according to claim 5, wherein the selection unit (20) is configured to determine the optimal tariff or the optimal tariff constellation for all network connections (2) travelled by the road user within a predetermined time window.

7. Server (10) according to one of the preceding claims, comprising a control unit (27) configured to use mobile network location data (25) of the mobile device (8), to determine a spatial and/or temporal deviation of the position messages (5, 5', 5", 30) transmitted from the mobile device (8) to the back-end server, from the corresponding mobile network location data (25).

8. Server (10) according to one of the preceding claims, comprising a pattern recognition unit (28) configured to automatically identify at least one movement pattern of the successive position messages (5', 5", 30) which corresponds to an entry (5') or exit (5").

9. System for automatically calculating and billing a network connection used by a transport user, the system comprising:
a back-end server according to one of claims 1 to 8, and
a mobile device (8) for communication with the back-end server having a locating unit (32) for determining at least a geographic position of the mobile device, **characterized by** a communication unit (31) configured to;
transmit a start message, triggered manually by the transport user, to the path identification unit (12) in order to trigger the said identification of the most plausible network nodes, wherein the start message includes a station ID of a start station of the travelled network connection; and
automatically transmit successive geographic position messages (5, 5', 5", 30) of the mobile device (8) via a wireless communication network to the path detection unit (12) of the back-end server, each of the position messages including at least the current geographic position of the mobile device (8) and a time stamp.

10. System according to claim 9, wherein the mobile device comprises a detection unit (34) , the detection unit being configured to, on the basis of acceleration sensor data of the mobile device (8), to detect changes in the type of movement of the mobile device and to transmit them to the path identification unit (12) as entry or exit messages (5', 5").

11. System according to claim 10, wherein the communication unit (31) is configured to trigger transmission of the stored geographic positions manually by an input by the transport user, automatically when the transport user exits (5"), automatically upon receipt of a query message (29) from the path identification unit (12), or automatically at the end of a predetermined time window.

12. System according to claim 11, wherein the locating unit (32) comprises an interface (33) input configured for transmitting a manual input by the transport user as the said exit message (5', 5", 30) to the path identification unit (12).

13. System according to claim 12, wherein:
the input interface (33) is configured to transmit a manual query message from the transport user to a tariff selection unit (20) of the back-end server,
the communication unit (31) is configured to receive at the mobile device (8) the tariff determined by the selection unit (20), and
the mobile device (8) comprises a rendition interface configured to inform the transport user of the received tariff.

## Revendications

1. Serveur back-end (10) pour calculer et facturer automatiquement l'utilisation d'un réseau de transport (1) par un utilisateur du réseau, le réseau comprenant une pluralité de noeuds, et dans lequel l'utilisation comprend le voyage sur au moins une connexion réseau (2) entre au moins deux des noeuds du transport (1) ;
**caractérisé par** une unité d'identification d'itinéraire (12) configurée pour :
recevoir d'un dispositif mobile de l'utilisateur un message de départ déclenché manuellement par l'utilisateur, le message comprenant un identifiant de station d'une station de départ de la connexion réseau parcourue par l'utilisateur ;
déclenché par le message de départ, et basé sur des messages de position successifs (5, 5', 5", 30) transmis par l'appareil mobile (8) de l'utilisateur au serveur back-end, utilisant un premier algorithme de recherche de chemin pour identifier automatiquement ledit au moins une connexion réseau parcourue par l'utilisateur entre un noeud de départ et un noeud de sortie ayant la distance temporelle et spatiale la plus faible à la succession de messages de position, de sorte que les noeuds de réseau les plus plausibles qui correspondent aux messages de position sont déterminés,
dans lequel les messages de position messages comprennent chacun la position géographique du dispositif mobile (8) et un horodatage, et
dans lequel la connexion réseau parcourue comprend au moins deux moyens de transport différents.

2. Serveur (10) selon la revendication 1, qui :
- comprend une première unité de mémoire (16) dans laquelle les informations de localisation géographique et les informations noeud et de connexion des connexions réseau (2) sont enregistrée d'une façon récupérable en tant que première base de connaissances,
- comprend une première unité d'identification de noeud (14), adaptée pour identifier un noeud de sortie (3") de la au moins une connexion réseau parcourue (2), sur la base d'un message de position de sortie (5", 30 ) transmis du dispositif mobile (8) au serveur back-end, et sur la base de la première base de données de connaissances (16), en utilisant un deuxième algorithme de recherche de chemin.

3. Serveur (10) selon la revendication 2, dans lequel l'unité d'identification d'itinéraire (12) comprend une seconde unité d'identification de noeud (15), configurée pour identifier au moins un noeud intermédiaire (5) de la au moins une connexion réseau parcourue en fonction des messages position intermédiaires (5, 30) reçus du dispositif mobile (8), sur la base de la première base de données de connaissances (16) en utilisant un troisième algorithme de recherche de chemin.

4. Serveur (10) selon la revendication 3, comprenant une deuxième unité de mémoire dans laquelle les données d'horaire des connexions réseau (2) sont stockées d'une façon récupérable en tant que deuxième base de données de connaissances (17), la deuxième unité de détection de noeud (17) étant configuré pour identifier les noeuds de la au moins une connexion réseau parcourue (2), sur la base des données d'horaire.

5. Serveur (10) selon l'une des revendications précédentes, qui :
- comprend une troisième unité de mémoire, dans laquelle les tarifs des connexions réseau (2) sont stocké d'une façon récupérable en tant que troisième base de données de connaissances (19), et
- comprend une unité de sélection (20) configurée pour déterminer un tarif optimal parmi les tarifs stockés pour la au moins une connexion réseau parcourue (2), ou une constellation optimale des tarifs stockés pour la au moins une connexion réseau parcourue (2).

6. Serveur (10) selon la revendication 5, dans lequel l'unité de sélection (20) est configurée pour déterminer le tarif optimal ou la constellation tarifaire optimale pour toutes les connexions réseau (2) parcourues par l'utilisateur pendant une fenêtre temporelle prédéterminée.

7. Serveur (10) selon l'une des revendications précédentes, comprenant une unité de contrôle (27) configurée pour utiliser des données de localisation de réseau mobile (25) du dispositif mobile (8), pour déterminer un écart spatial et/ou temporel des messages de positions (5, 5', 5", 30) transmis du dispositif mobile (8) au serveur back-end, à partir des données de localisation du réseau mobile correspondantes (25).

8. Serveur (10) selon l'une des les revendications précédentes, comprenant une unité de reconnaissance de formes (28) configurée pour identifier au moins une forme de mouvement dans les messages de positions (5', 5", 30) qui correspondent à un départ (5') ou une sortie (5").

9. Système de calcul et facturation automatique d'une connexion réseau parcourue par un utilisateur de transport, le système comprenant :
un serveur back-end selon l'une des revendications 1 à 8, et
un dispositif mobile (8) pour communication avec le serveur back-end, le dispositif mobile comprenant une unité de localisation (32) pour déterminer au moins une position géographique du dispositif mobile, **caractérisé par** une unité de communication (31) configurée pour;
transmettre un message de départ, déclenché manuellement par l'utilisateur, à l'unité identification d'itinéraire (12) afin de déclencher ladite identification des noeuds de réseau les plus plausibles, le message de départ comprenant un identifiant de station d'une station de départ de la connexion réseau parcourue; et
transmettre automatiquement les messages position géographique successifs (5, 5', 5", 30) du dispositif mobile (8) via un réseau de communication sans fil à l'unité d'identification d'itinéraire (12) du serveur back-end, chacun des messages position comprenant la location actuelle du dispositif mobile et un horodatage.

10. Système selon la revendication 9, le dispositif mobile comprenant une unité de détection (34) configurée pour transmettre vers l'unité d'identification d'itinéraire (12) sous forme de message d'e départ ou de sortie (5', 5"), sur la base de données d'un capteur d'accélération du dispositif mobile (8), en détectant des changements dans le type de mouvement du dispositif mobile .

11. Système selon la revendication 10, dans lequel l'unité de communication (31) est configurée pour déclencher la transmission des positions géographiques stockées, soit manuellement, soit automatiquement lors de la sortie (5") de l'utilisateur, soit automatiquement au bout d'une fenêtre temporelle prédéterminée.

12. Système selon la revendication 11, dans lequel l'unité de localisation (32) comprend une interface (33) configuré pour transmettre une entrée manuelle par l' transport en tant que ledit message de sortie (5', 5", 30) vers l'unité d'identification d'itinéraire (12).

13. Système selon la revendication 12, dans lequel :
l'interface d'entrée (33) est configurée pour transmettre un message d'interrogation manuelle de l'utilisateur vers une unité de sélection tarifaire (20) du serveur back-end,
l'unité de communication (31 ) est configurée pour recevoir au dispositif mobile (8) le tarif déterminé par l'unité de sélection (20), et
le dispositif mobile (8) comprend une interface de reproduction configurée pour informer l'utilisateur sur le tarif reçu.
